Europäisches Patentamt

European Patent Office

Office européen des brevets

(11) Veröffentlichungsnummer: **0 086 348**
**B1**

(12) EUROPÄISCHE PATENTSCHRIFT

(45) Veröffentlichungstag der Patentschrift:
30.04.86

(51) Int. Cl.⁴: **F 02 D 19/02**

(21) Anmeldenummer: 83100473.4

(22) Anmeldetag: 20.01.83

(54) Verfahren zur Versorgung einer Brennkraftmaschine mit Kraftstoff und Kraftstoffversorgungsanlage zur Durchführung des Verfahrens.

(30) Priorität: 11.02.82 DE 3204752

(43) Veröffentlichungstag der Anmeldung:
24.08.83 Patentblatt 83/34

(45) Bekanntmachung des Hinweises auf die Patenterteilung:
30.04.86 Patentblatt 86/18

(84) Benannte Vertragsstaaten:
DE FR GB IT NL

(56) Entgegenhaltungen:
EP - A - 0 057 591
WO - A - 79/00528
WO - A - 81/00282
DE - A - 2 520 322
DE - A - 2 805 787
DE - A - 3 024 791
DE - B - 1 021 637
GB - A - 1 389 839

(73) Patentinhaber: ROBERT BOSCH GMBH, Postfach 50,
D-7000 Stuttgart 1 (DE)

(72) Erfinder: van der Weide, Jouke, Leeuwendaallaan 51,
NL-2281 GK Rijswijk (NL)

## Beschreibung

### Stand der Technik

Die Erfindung geht aus von einem Verfahren nach der Gattung des Anspruchs 1 und einer Kraftstoffversorgungsanlage nach der Gattung des Anspruchs 4. Es ist schon eine Kraftstoffversorgungsanlage zur Einblasung von Flüssiggas bekannt (WO-A-79/00 528), bei der eine Zumessung des Flüssiggases in Abhängigkeit von Betriebskenngrößen der Brennkraftmaschine und anschließende Einspritzung in das Saugrohr durch eine Düse erfolgt. Dabei ist vorgesehen, daß die zum Zumeßventil führende Versorgungsleitung durch eine Mischkammer des Saugrohres führt, durch die die Ansaugluft strömt und in die das Flüssiggas durch die Düse abgespritzt wird. Hierdurch ist keine ausreichende Kühlung des Flüssiggases stromaufwärts des Zumeßventiles gewährleistet, so daß die Gefahr besteht, daß zumindest ein Teil des Flüssiggases verdampft, wodurch sich der Nachteil ergibt, daß im flüssigen Flüssiggas gelöste ölartige Bestandteile nach dem Verdampfen des Flüssiggases sich als ölartige Rückstände am Zumeßventil ablagern und zu Fehlern in der Zumessung führen.

Bei einer anderen bekannten Kraftstoffversorgungsanlage (WO-A-81/00282) wird das Flüssiggas stromaufwärts eines gleichzeitig zur Einspritzung dienenden Zumeßventiles in aufwendiger Weise in einem Wärmetauscher gekühlt, in dem eine von der Vorsorgungsleitung abgezweigte Flüssiggasmenge verdampft.

Eine Kraftstoffversorgungsanlage mit einem Druckerzeugeraggregat stromaufwärts eines Vergasers ist bereits bekannt (GB-A-13 89 839), wobei jedoch keine zusätzliche Kühlung des zum Vergaser strömenden Flüssiggases vorgesehen ist.

### Vorteile der Erfindung

Das erfindungsgemäße Verfahren mit den kennzeichnenden Merkmalen des Anspruches 1 und die erfindungsgemäße Vorrichtung mit den kennzeichnenden Merkmalen des Anspruches 4 haben demgegenüber den Vorteil, daß ohne vorherige Bildung von Dampfblasen eine genaue Zumessung der Flüssiggasmenge in Abhängigkeit von Betriebskenngrößen der Brennkraftmaschine erfolgt, so daß bei möglichst geringem Flüssiggasbedarf und geringer Schadstoffemission eine möglichst große Leistung erzielt wird. Vorteilhaft ist zusätzlich, daß durch die im Saugrohr erfolgende Verdampfung des Flüssiggases nicht nur das Flüssiggas stromaufwärts des Zumeßventiles, sondern auch die angesaugte Luft gekühlt wird, wodurch sich ein höherer Füllungsgrad der Zylinder und ein höherer Oktanwert des Gemisches mit der Folge einer Leistungsverbesserung und geringerer Klopfneigung ergibt.

Durch die in den abhängigen Patentansprüchen aufgeführten Maßnahmen sind vorteilhafte Weiterbildungen und Verbesserungen des im Anspruch 1 angegebenen Verfahrens und der im Anspruch 4 angegebenen Kraftstoffversorgungsanlage möglich.

### Zeichnung

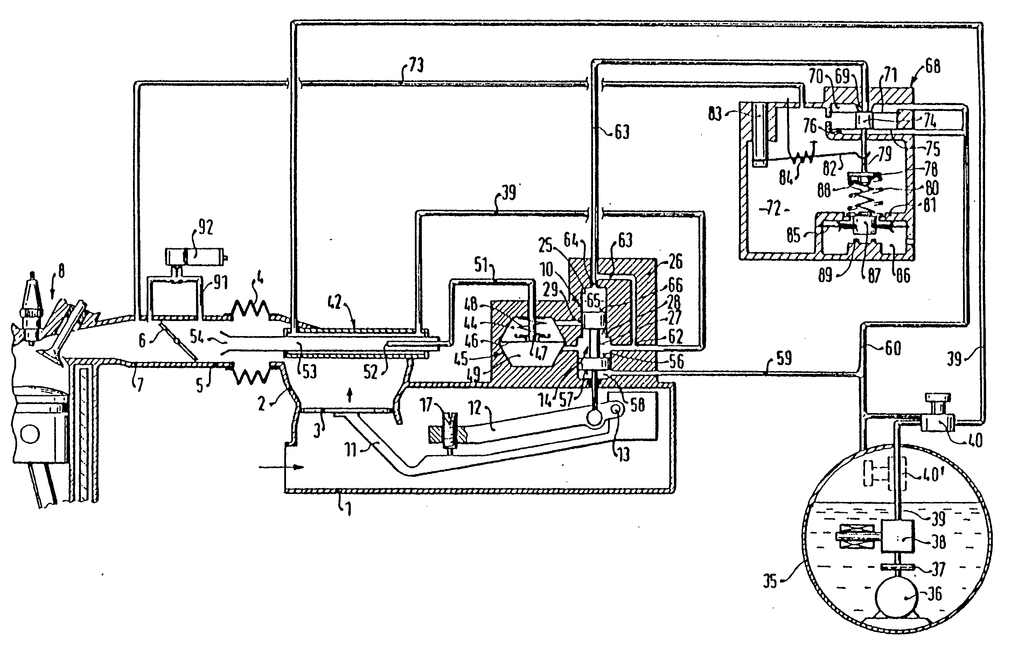

Ein Ausführungsbeispiel der Erfindung ist in der Zeichnung vereinfacht dargestellt und in der nachfolgenden Beschreibung näher erläutert.

### Beschreibung des Ausführungsbeispieles

Bei der in der Zeichnung dargestellten Kraftstoffversorgungsanlage für Flüssiggas (LPG) strömt die Verbrennungsluft stromabwärts eines nicht dargestellten Luftfilters in Pfeilrichtung über einen Saugrohrabschnitt 1 in einen konischen Abschnitt 2, in dem ein Luftmeßorgan 3 angeordnet ist und weiterhin durch einen elastisch verformbaren Abschnitt 4 und einen Abschnitt 5 über eine Drosselklappe 6 zu eines Saugrohrabschnitt 7 und von dort zu einem oder mehreren Zylindern 8 einer Brennkraftmaschine, beispielsweise einer gemischverdichtenden fremdgezündeten oder einer selbstzündenden Brennkraftmaschine. Das Luftmeßorgan 3 ist beispielsweise eine quer zur Strömungsrichtung angeordnete Stauklappe 3, die sich im konischen Abschnitt 2 des Saugrohres beispielsweise nach einer annähernd linearen Funktion der durch das Saugrohr strömenden Luftmenge bewegt, wobei durch eine konstante am Luftmeßorgan 3 angreifende Rückstellkraft sowie einen konstanten vor dem Luftmeßorgan 3 herrschenden Luftdruck der zwischen dem Luftmeßorgan 3 und der Drosselklappe 6 herrschende Druck ebenfalls konstant bleibt. Das Luftmeßorgan 3 steuert ein Zumeßventil 10. Zur Übertragung der Stellbewegung des Luftmeßorgans 3 dient ein mit ihm verbundener Schwenkhebel 11, der gemeinsam mit einem Korrekturhebel 12 an einem Drehpunkt 13 gelagert ist und bei seiner Schwenkbewegung ein als Zumeßkolben 14 ausgebildetes bewegliches Ventilteil des Zumeßventils 10 betätigt. An einer Gemischregulierschraube 17 zwischen Schwenkhebel 11 und Korrekturhebel 12 läßt sich das gewünschte Kraftstoff-Luft-Gemisch korrigieren.

Der Zumeßkolben 14 ist in einer Führungsbohrung 25 des Zumeßventilgehäuses 26 gleitbar gelagert und ist mit einer Ringnut 27 versehen. Dem Schwenkhebel 11 abgewandt wird die Ringnut 27 durch eine axiale Begrenzungsfläche 28 als Steuerfläche begrenzt, die bei einer axialen Bewegung des Zumeßkolbens 14 eine in der Wandung der Führungsbohrung 25 ausgebildete Zumeßöffnung 29, beispielsweise in Form eines Schlitzes, mehr oder weniger zur Ringnut 27 hin öffnet.

Die Kraftstoffversorgung mit Flüssiggas erfolgt aus einem Flüssiggastank 35, der als ein speziell konstruierter Druckbehälter gestaltet ist und der Flüssiggas gefülltem Zustand unter einem Druck von ca. 10 bis 15 bar aufnimmt.

Durch ein Druckerzeugeraggregat in Form einer Pumpe 36, die vorzugsweise in Flüssiggastank 35 angeordnet ist, wird das Flüssiggas über einen Filter 37 und ein Absperrventil 38 in eine Versorgungsleitung 39 gefördert. Das Absperrventil 38, das bei abgeschalteter Anlage die Versorgungsleitung 39 unterbricht, und der Filter 37 können ebenfalls in vorteilhafter Weise im Flüssiggastank 35 angeordnet sein. Die Pumpe 36 fördert das Flüssiggas in die Versorgungsleitung 39 mit einem Druck von beispielsweise 5 bar oberhalb des Daspfdruckes des Flüssiggases. Ein Druckregelaggregat 40 in der Versorgungsleitung 39, beispielsweise ein Druckregler bekannter Bauart, regelt in der Versorgungsleitung 39 einen vorbestimmten Druck von beispielsweise 4 bar oberhalb des Dampfdruckes ein. Der Druckregler 40 kann außerhalb des Flüssiggastankes 35 oder wie mit 40' gestrichelt dargestellt ist, innerhalb des Flüssiggastankes 35 angeordnet sein. Das Flüssiggas der Versorgungsleitung 39 wird stromaufwärts des Zumeßventiles 10 durch einen Wärmetauscher 42 geleitet, den es im Gegenstrom zu dem am Zumeßventil 10 zugemessenen Flüssiggas durchströmt und damit von dem zumindest teilweise verdampfenden zugemessenen Flüssiggas gekühlt wird. Durch die Druckregelung oberhalb des Dampfdruckes und der zusätzlichen Kühlung im Wärmetauscher 42 wird gewährleistet, daß das Flüssiggas am Zumeßventil 10 auch bei höherer Umgebungstemperatur in flüssigem Zustand vorliegt und nicht in der Anlage bis zur gewollten Verdampfung infolge von Geschwindigkeitsänderungen Druckunterschiede auftreten, die zu einer instabilen Bildung von Dampfblasen führen. Das über die Versorgungsleitung 39 in die Ringnut 27 des Zumeßkolbens 14 gelangende Flüssiggas kann je nach axialer Stellung der Steuerfläche 28 mehr oder weniger über die Zumeßöffnung 29 in eine Einspritzkammer 44 eines Fegelventiles 45 strömen, in der ein mit einer Regelventilmembran 46 zusammenwirkender Ventilsitz 47 und eine die Regelventilmembran 46 in Offnungsrichtung des Regelventils 45 beaufschlagende Regelventilfeder 48 angeordnet ist. Die Regelventilmembran 46 trennt die Einspritzkammer 44 von einer Steuerkammer 49, die mit der Versorgungsleitung 39 beispielsweise über die Ringnut 27 des Zumeßkolbens 14 in Verbindung steht. Durch das Regelventil 45 wird unabhängig von der an der Zumeßöffnung 29 zugemessenen Flüssiggasmenge an der Zumeßöffnung 29 jeweils eine konstante Druckdifferenz aufrechterhalten. Das über den Ventilsitz 47 des Regelventiles 45 abströmende zugemessene Flüssiggas gelangt über eine Verbindungsleitung 51 in den Wärmetauscher 42 und kann dort über eine Verdampferdüse 52 in eine Einblaseleitung 53 unter zumindest teilweiser Verdampfung bei gleichzeitiger Kühlung des über die Versorgungsleitung 39 strömenden Flüssiggases gelangen. Mittels der Einblaseleitung 53 wird das Flüssiggas beispielsweise zum Saugrohrabschnitt 5 geführt und über eine oder mehrere Düsen 54 stromaufwärts der Drosselklappe 6 in den Saugrohrabschnitt 5 eingeblasen.

Die Ringnut 27 des Zumeßkolbens 14 wird der Steuerfläche 28 abgewandt von einer Begrenzungsfläche 56 begrenzt. Dem Luftmeßorgan 3 zugewandt ist an dem Zumeßkolben 14 ein Kompensationsabsatz 57 ausgebildet, dessen Ringfläche gleich groß wie die der Begrenzungsfläche 56 ist. Die Ringfläche des Kompensationsabsatzes 57 begrenzt einerseits einen in der Führungsbohrung 25 ausgebildeten Kompensationsraum 58, der über eine Stichleitung 59 mit einer Rückströmleitung 60 zum Flüssiggastank 35 in Verbindung steht. Hierdurch wird ein Einfluß des sich mit der Umgebungstemperatur ändernden Dampfdruckes des Flüssiggases auf die Stellung des Zumeßkolbens 14 vermieden.

Zur Erzeugung der Rückstellkraft auf den Zumeßkolben 14 und damit auf das Luftmeßorgan 3 dient ebenfalls Flüssiggas. Hierfür zweigt von der Versorgungsleitung 39 über eine Abkopplungsdrossel 62 eine Steuerdruckleitung 63 ab. Mit der Steuerdruckleitung 63 ist über eine Dämpfungsdrossel 64 ein Druckraum 65 verbunden, der in der Führungsbohrung 25 des Zumeßkolbens 14 ausgebildet ist und in den der Zumeßkolben 14 mit seiner dem Luftmeßorgan 3 abgewandten Stirnfläche 66 ragt. Zur Anpassung des Flüssiggas-Luft-Gemisches an die Betriebskenngrößen der Brennkraftmaschine ist der Druck in der Steuerdruckleitung 63 und damit die Rückstellkraft auf den Zumeßkolben 14 und das Luftmeßorgan 3 änderbar. Hierfür ist in der Steuerdruckleitung 63 ein Drucksteuerventil 68 angeordnet, das durch Betriebskenngrößen wie Temperatur, Drehzahl, Drosselklappenstellung, Abgaszusammensetzung und andere ansteuerbar ist und den Druck in der Steuerdruckleitung 63 zur Gemischanpassung beeinflußt. Das Drucksteuerventil 68 kann elektromagnetisch betätigbar oder wie im folgenden beispielsweise beschrieben und in der Zeichnung dargestellt ausgebildet sein. Das Drucksteuerventil 68 ist als Flachsitzventil ausgebildet, mit einem festen Ventilsitz 69, der in eine Rückströmkammer 70 ragt und über den die Steuerdruckleitung 63 in die Rückströmkammer 70 mündet. Mit dem festen Ventilsitz 69 wirkt eine Ventilmembran 71 zusammen, die die Rückströmkammer 70 von einer Unterdruckkammer 72 trennt, die mit einer zum Saugrohrabschnitt 7 stromabwärts der Drosselklappe 6 führenden Unterdruckleitung 73 verbunden ist. Über ein Kopplungsglied 74 ist die Ventilmembran 71 mit einer Kompensationsmembran 75 verbunden, die die Unterdruckkammer 72 von einer Kompensationskammer 76 trennt. Sowohl die Rückströmkammer 70 als auch die Kompensationskammer 76 sind mit der Rückströmleitung 60 zum Flüssiggastank 35 verbunden. Die Kompensationsmembran 75 dient zur Kompensation des Einflusses des Flüssiggasdampfdruckes auf die Ventilmembran 71. Hierfür ist es erforderlich, daß die der Rückströmkammer 70 zugewandte Ventilfläche der Ventilmembran 71 gleich groß ist wie die der Kompensationskammer 76 zugewandte Fläche der Kompensationsmembran 75, wobei die der Unterdruckkammer 72 zugewandten Membranflächen ebenfalls gleich groß sein sollen. In Schließrichtung des Drucksteuerventils 68 greift über einen Federteller 78 und einen Ventilstift 79 und das Kopplungsglied 74 an der Ventilmembran 71 eine Ventilfeder 80 an, die sich dem Federteller 78 abgewandt an einer gehäusefesten Anlage 81 abstützt.

Bei Temperaturen unterhalb der Motorbetriebstemperatur von ca. 80°C kann der durch den Ventilstift 79 übertragenen Schließkraft auf das Drucksteuerventil 68 ein temperaturabhängig arbeitendes Element in Form einer Bimetallfeder 82 entgegenwirken, die mit ihrem einen Ende während der Warmlaufphase der Brennkraftmaschine am Federteller 78 anliegt und deren anderes Ende an einem in das Gehäuse des Drucksteuerventiles 68 eingepreßten Bolzen 83 befestigt ist. Auf der Bimetallfeder 82 kann ein elektrischer Heizkörper 84 aufgesetzt sein, der ab der Zündung der Brennkraftmaschine mit Strom versorgt wird. Das Drucksteuerventil 68 weist weiterhin eine Steuermembran 85 auf, die die Unterdruckkammer 72 von einer Atmosphärenkammer 86 trennt, in der Atmosphärendruck herrscht. an der Steuermembran 85 greift ein Federteller 87 an, an dem sich eine Steuerfeder 88 abstützt, die parallel zur Ventilfeder 80 verlaufend andererseits am Federteiller 78 angreift. Die Bewegung der Steuermembran 85 ist dadurch begrenzbar, daß der Federteller 87 in einer Bewegungsrichtung an der Anlage 81 und in der entgegengesetzten Bewegungsrichtung an einem Anschlag 89 zum Anliegen kommen kann.

**Die Wirkungsweise der Anlage ist folgende:**

Beim Start der Brennkraftmaschine wird das Absperrventil 38 geöffnet und das Flüssiggas mittels der Pumpe 36 über die Versorgungsleitung 39 und den Wärmetauscher 42 zum Zumeßventil 10 gefördert. Mit dem Start saugt die Brennkraftmaschine über das Saugrohr 1 Luft an, durch die das Luftmeßorgan 3 eine gewisse Auslenkung aus seiner Ruhelage erfährt. Entsprechend der Auslenkung des Luftmeßorgans 3 wird über den Hebel 11 auch der Zumeßkolben 14 verschoben, dessen Steuerfläche 20 entsprechend der Stellung des Zumeßkolbens 14 mehr oder weniger die Zumeßöffnung 29 zur Ringnut 27 hin öffnet, so daß in Abhängigkeit von der durch das Luftmeßorgan 3 ermittelten angesaugten Luftmenge eine entsprechende Flüssiggasmenge am Zumeßventil 10 zugemessen und mittels der Einblaseleitung 53 beispielsweise zum Saugrohrabschnitt 5 geführt und über eine oder mehrere Düsen 54 stromaufwärts der Drosselklappe 6 in den Saugrohrabschnitt 5 eingeblasen wird. Zur Steuerung einer größeren Gemischmenge während des Warmlaufes der Brennkraftmaschine ist am Saugrohr 5, ein die Drosselklappe 6 umgehender Bypass 91 vorgesehen, dessen Querschnitt während der Warmlaufphase der Brennkraftmaschine in bekannter Weise durch ein Zusatzgemischventil 92 temperaturabhängig gesteuert wird.

Die direkte Verbindung zwischen Luftmeßorgan 3 und Zumeßkolben 14 bewirkt ein bestimmtes Verhältnis zwischen angesaugter Luftmenge und zugemessener Flüssiggasmenge. Um eine weitere Anreicherung des der Brennkraftmaschine zugeführten Gemisches während der Warmlaufphase der Brennkraftmaschine zu erzielen, kann durch das Drucksteuerventil 68 in dem Druckraum 65 ein geringerer Druck gesteuert werden, so daß die Rückstellkraft auf das Luftmeßorgan 3 und den Zumeßkolben 14 verringert und eine größere Flüssiggasmenge zugemessen und über die Düse 54 eingeblasen wird. Hierfür greift während der Warmlaufphase der Brennkraftmaschine an dem Federteller 78 des Drucksteuerventiles 68 dis Bimetallfeder 82 derart an, daß die Ventilfeder 80 und die Steuerfeder 88 entlastet werden und die Ventilmembran 7; vom Ventilsitz 69 mehr abhebt, wodurch sich der Druck in der Steuerdruckleitung 63 und im Druckraum 65 verringert.

Nach Ablauf der Warmlaufphase der Brennkraftmaschine bzw. Aufheizung der Bimetallfeder 82 durch den elektrischen Heizkörper 84 biegt sich die Bimetallfeder 82 in Richtung von dem Federteller 78 weg und kommt außer Eingriff mit dem Federteller 78, so daß die Federkräfte von Ventilfeder 80 und Steuerfeder 88 voll wirksam werden und ein höherer Druck in der Steuerdruckleitung 63 gesteuert wird, was zu einer Abmagerung des der Brennkraftmaschine zugeführten Gemisches führt. Eine derartige Abmagerung des Gemisches ist bei einem Betrieb der Brennkraftmaschine im Teillastbereich erwünscht. Im Teillastbereich der Brennkraftmaschine ist der Unterdruck im Saugrohrabschnitt 7 und damit über die Unterdruckleitung 73 in der Unterdruckkammer 72 des Drucksteuerventiles 68 so groß, daß die Druckkraft des der Atmosphärenluft in der Atmosphärenkammer 86 ausreicht, die Steuermembran 85 entgegen der Kraft der Steuerfeder 88 an der Anlage 81 zum Anliegen zu bringen. Sinkt nun bei Volllast der Unterdruck bzw. steigt bei Vollast der absolute Druck im Saugrohr 7 stromabwärts der Drosselklappe 6, so wird in der Unterdruckkammer 72 über die Unterdruckleitung 73 auch ein größerer absoluter Druck wirksam, der an der Steuermembran 85 angreifend diese zum Anschlag 89 hin bewegt, wodurch die Steuerfeder 88 entlastet wird und die Ventilmembran 71 den Ventilsitz 69 mehr öffnet, so daß der Druck in der Steuerdruckleitung 63 und im Druckraum 65 vermindert wird, was zu einer Anreicherung des Gemisches durch eine größere zugemessene Flüssiggasmenge führt. In gleicher Weise ergibt sich bei einer plötzlichen Beschleunigung der Brennkraftmaschine durch plötzliches Öffnen der Drosselklappe 6 eine Druckerhöhung in der Unterdruckleitung 73, die wie bei Vollast eine Anreicherung des Gemisches zur Folge hat.

**Patentansprüche**

1. Verfahren zur Versorgung einer Brennkraftmaschine (8) mit als Kraftstoff dienendem Flüssiggas mittels einer Kraftstoffversorgungsanlage, die eine Versorgungsleitung (39) und eine Düse (54) zur Einspritzung einer von Betriebskenngrößen der Brennkraftmaschine abhängigen Flüssiggasmenge aufweist, stromaufwärts welcher die einzuspritzende Flüssiggasmenge zugemessen wird, dadurch gekennzeichnet, daß das Flüssiggas vor der Zumessung auf einem Druck oberhalb des Dampfdruckes gehalten und durch einen Wärmetauscher (42) geleitet wird, in dem es durch das zur Düse (54) strömende, mindestens teilweise verdampfende zugemessene Flüssiggas gekühlt wird.

2. Verfahren nach Anspruch 1, dadurch gekennzeichnet, daß das Flüssiggas vor der Zumessung im Gegenstrom zu dem zugemessenen Flüssiggas durch den Wärmetauscher (42) strömt.

3. Verfahren nach Anspruch 1, dadurch gekennzeichnet, daß das Flüssiggas durch ein Druckerzeugeraggregat (36) mit einem bestimmten Druck oberhalb des Dampfdruckes in die Versorgungsleitung (39) gefördert wird.

4. Kraftstoffversorgungsanlage für Brennkraftmaschinen (8) mit einer Versorgungsleitung (39), einem Zumeßventil (10) und einer stromabwärts des Zumeßventiles (10) angeordneten Düse (54) zur Einspritzung einer von Betriebskenngrössen der Brennkraftmaschine abhängigen Flüssiggasmenge in das Saugrohr (5), zur Durchführung eines Verfahrens zur Versorgung einer Brennkraftmaschine (8) nach einem der Ansprüche 1 bis 3, dadurch gekennzeichnet, daß stromaufwärts des Zumeßventiles (10) das Flüssiggas durch ein Druckerzeugeraggregat (36) auf einem Druck oberhalb des Dampfdruckes gehalten und die Kraftstoffversorgungsleitung (39) stromaufwärts des Zumeßventiles (10) durch einen Wärmetauscher (42) geleitet wird, den ebenfalls das zur Düse (54) strömende, mindestens teilweise verdampfende Flüssiggas stromabwärts des Zumeßventiles (10) durchströmt.

5. Kraftstoffversorgungsanlage nach Anspruch 4, dadurch gekennzeichnet, daß das Zumeßventil (10) stromabwärts mit einer Einblaseleitung (53) des Wärmetauschers (42) verbunden ist und die Kraftstoffversorgungsleitung (39) stromaufwärts des Zumeßventiles (10) so am Wärmetauscher (42) angeordnet ist, daß das über die Kraftstoffversorgungsleitung (39) zum Zumeßventil (10) geleitete Flüssiggas im Gegenstrom zu dem durch die Einblaseleitung (53) zur Düse (54) strömenden zugemessenen Flüssiggas und die Einblaseleitung (53) umgebend durch den Wärmetauscher (42) strömt.

6. Kraftstoffversorgungsanlage nach Anspruch 5, dadurch gekennzeichnet, daß stromabwärts des Druckerzeugeraggregates (36) das Flüssiggas in der Kraftstoffversorgungsleitung (39) ein Druckregelaggregat (40, 40') angeordnet ist.

7. Kraftstoffversorgungsanlage nach Anspruch 6, dadurch gekennzeichnet, daß das Druckerzeugeraggregat (36) innerhalb eines Flüssiggastankes (35) angeordnet ist.

8. Kraftstoffversorgungsanlage nach Anspruch 4 oder 5, dadurch gekennzeichnet, daß das Zumeßventil (10) ein bewegliches Ventilteil (14) hat, dessen Stellung entgegen einer Rückstellkraft durch ein auf die Ansaugluftmenge im Saugrohr ansprechendes Luftmeßorgan (3) bestimmt wird.

9. Kraftstoffversorgungsanlage nach Anspruch 8, dadurch gekennzeichnet, daß als bewegliches Ventilteil des Zumeßventiles (10) ein Zumeßkolben (14) dient.

10. Kraftstoffversorgungsanlage nach Anspruch 9, dadurch gekennzeichnet, daß der durch das Luftmeßorgan (3) betätigbare Zumeßkolben (14) in einer Führungsbohrung (25) gelagert ist und eine in der Wandung der Führungsbohrung (25) vorgesehene Zumeßöffnung (29) mehr oder weniger öffnet.

11. Kraftstoffversorgungsanlage nach Anspruch 10, dadurch gekennzeichnet, daß der Zumeßkolben (14) in der Führungsbohrung (25) axial verschiebbar gelagert ist.

12. Kraftstoffversorgungsanlage nach Anspruch 11, dadurch gekennzeichnet, daß der Zumeßkolben (14) eine Ringnut (27) aufweist, deren eine axiale Begrenzungsfläche als Steuerfläche (28) mit der Zumeßöffnung (29) zusammenwirkt.

13. Kraftstoffversorgungsanlage nach Anspruch 12, dadurch gekennzeichnet, daß die Zumeßöffnung (29) mit einer Einspritzkammer (44) eines Regelventiles (45) verbunden ist, in der ein mit einer beweglichen Wand (46) zusammenwirkender Ventilsitz (47) und eine die bewegliche Wand (46) in Offnungsrichtung des Regelventiles (45) beaufschlagende Regelventilfeder (48) angeordnet und die durch die bewegliche Wand (46) von einer Steuerkammer (49) getrennt ist, in der der Druck des Flüssiggases stromaufwärts der Zumeßöffnung (29) herrscht.

14. Kraftstoffversorgungsanlage nach Anspruch 12, dadurch gekennzeichnet, daß am Zumeßkolben (14) ein ringförmiger Kompensationsabsatz (57) ausgebildet ist, dessen Ringfläche gleich groß wie die der der Steuerfläche (28) abgewandten Begrenzungsfläche (56) der Ringnut (27) ist und der einerseits einen Kompensationsraum (58) begrenzt, der mit dem Flüssiggastank (35) in Verbindung steht.

15. Kraftstoffversorgungsanlage nach Anspruch 14, dadurch gekennzeichnet, daß zur Erzeugung der Rückstellkraft am Zumeßkolben (14) Flüssiggas dient, dessen Druck in Abhängigkeit von Betriebskenngrößen der Brennkraftmaschine durch mindestens ein Drucksteuerventil (68) zur Anpassung des Flüssiggas-Luft-Gemisches änderbar ist.

16. Kraftstoffversorgungsanlage nach Anspruch 15, dadurch gekennzeichnet, daß der Zumeßkolben (14) mit seiner dem-Kompensationsabsatz (57) abgewandten Stirnfläche (66) in einen Druckraum (65) ragt, der mit einer Steuerdruckleitung (63) in Verbindung steht, die mit der Flüssiggas-Versorgungsleitung (39) verbunden und einerseits durch eine Abkopplungsdrossel (62) und andererseits durch das Drucksteuerventil (68) begrenzt ist.

17. Kraftstoffversorgungsanlage nach Anspruch 16, dadurch gekennzeichnet, daß das Drucksteuerventil (68) eine Ventilmembran (71) aufweist, die eine mit einer zum Saugrohr (7) stromabwärts einer Drosselklappe (6) führenden Unterdruckleitung (73) verbundene Unterdruckkammer (72) von einer mit dem Flüssiggastank (35) verbundenen Rückströmkammer (70) trennt und mit einem in die Rückströmkammer (70) ragenden Ventilsitz (69) zusammenwirkt, über den die Steuerdruckleitung (63) in die Rückströmkammer (70) mündet und die über ein Kopplungsglied (74) mit einer Kompensationsmembran (75) verbunden ist, die die Unterdruckkammer (72) von einer mit dem Flüssiggastank (35) verbundenen Kompensationskammer (76) trennt und daß in der Unterdruckkammer (72) eine Ventilfeder (80) angeordnet ist, die die Ventilmembran (71) in Richtung zum Ventilsitz (69) hin belastet und andererseits gehäusefest gelagert ist und deren Schließkraft auf die Ventilmembran (71) bei Temperaturen unterhalb der Motorbetriebstemperatur durch ein temperaturabhängig arbeitendes Element (82) verringerbar ist.

18. Kraftstoffversorgungsanlage nach Anspruch 17, dadurch gekennzeichnet, daß in der Unterdruckkammer (72) eine Steuerfeder (88) angeordnet ist, die zusätzlich zur Ventilfeder (80) die Ventilmembran (71) in Richtung zum Ventilsitz (69) hin belastet und andererseits an einer Steuermembran (85) angreift, die einerseits der Steuerfeder (88) zugewandt vom Druck in der Unterdruckkammer (72) und andererseits vom Atmosphärendruck beaufschlagbar ist.

19. Kraftstoffversorgungsanlage nach Anspruch 18, dadurch gekennzeichnet, daß die Steuermembran (85) bei einem bestimmten Saugrohrdruck eine Bewegung in Richtung einer Verringerung der Schließkraft der Steuerfeder (88) auf die Ventilmembran (71) ausführt und die Bewegung der Steuermembran (85) durch Anschläge (81, 89) begrenzbar ist.

**Claims:**

1. Method for supplying an internal combustion engine (8) with liquefied petroleum gas, acting as a fuel, by means of a fuel supply installation which has a supply line (39) and a nozzle (54) for injecting a liquefied petroleum gas quantity which depends on the operating characteristics of the internal combustion engine, up stream of which nozzle (54) the liquefied petroleum gas quantity to be injected is metered, characterised in that the liquefied petroleum gas, before the metering, is held at a pressure above the vapour pressure and is conveyed through a heat exchanger (42), in which it is cooled by the at least partially vapourising, metered liquefied petroleum gas flowing towards the nozzle (54).

2. Method according to Claim 1, characterised in that the liquefied petroleum gas, before the metering, flows through the heat exchanger (42) in the counterflow to the metered liquefied petroleum gas.

3. Method according to Claim 1, characterised in that the liquefied petroleum gas is fed into the supply line (39) at a certain pressure above the vapour pressure by a pressure-generating unit (36).

4. Fuel supply installation for internal combustion engines (8) having a supply line (39), a metering valve (10) and a nozzle (54), arranged downstream from the metering valve (10), for injecting a liquefied petroleum gas quantity into the suction pipe (5), which liquefied petroleum gas quantity depends on the operating characteristics of the internal combustion engine, for implementing a method for supplying an internal combustion engine (8) according to one of Claims 1 to 3, characterised in that, upstream from the metering valve (10), the liquefied petroleum gas is held at a pressure above the vapour pressure by a pressure-generating unit (36), and the fuel supply line (39), upstream from the metering valve (10), is guided through a heat exchanger (42), through which the liquefied petroleum gas likewise flows downstream from the metering valve (10), which liquefied petroleum gas at least partially vapourises and flows towards the nozzle (54).

5. Fuel supply installation according to Claim 4, characterised in that the metering valve (10) is connected downstream with an injection line (53) of the heat exchanger (42), and the fuel supply line (39), upstream from the metering valve (10), is arranged at a heat exchanger (42) in such a way that the liquefied petroleum gas conveyed via the fuel supply line (39) to the metering valve (10) flows through the heat exchanger (42) in the counterflow to the metered liquefied petroleum gas, flowing through the injection line (53) towards the nozzle (54), and flows such that it surrounds the injection line (53).

6. Fuel supply installation according to Claim 5, characterised in that, downstream from the pressuregenerating unit (36), a pressure-regulating unit (40 40') is arranged in the fuel supply line (39).

7. Fuel supply installation according to Claim 6, characterised in that the pressure-generating unit (36) is arranged inside a liquefied petroleum gas tank (35).

8 Fuel supply installation according to Claim 4 or 5, characterised in that the metering valve (10) has a moveable valve part (14), the position of which is determined against a restoring force by an air-measuring member (3) corresponding to the intake air quantity in the suction pipe.

9. Fuel supply installation according to Claim 8, characterised in that a metering piston (14) acts as the moveable valve part of the metering valve (10).

10. Fuel supply installation according to Claim 9, characterised in that the metering piston (14) which can be actuated by the air-measuring member (3) is mounted in a guide bore (25) and opens a metering opening (29) to a greater or lesser degree, which metering opening (29) is provided in the wall of the guide bore (25).

11. Fuel supply installation according to Claim 10, characterised in that the metering piston (14) is mounted in axially displaceable manner in the guide bore (25).

12. Fuel supply installation according to Claim 11, characterised in that the metering piston (14) has an annular groove (27), one axial boundary surface of which interacts as a control surface (28) with the metering opening (29).

13. Fuel supply installation according to Claim 12, characterised in that the metering opening (29) is connected to an injection chamber (44) of a regulating valve (45), in which injection chamber (44) is arranged a valve seat (47) interacting with a moveable wall (46), and a regulating-valve spring (48) acting upon the moveable wall (46) in the opening direction of the regulating valve (45), and which is separated from a control chamber (49) by the moveable wall (46), in which control chamber (49) the pressure of the liquefied petroleum gas prevails upstream from the metering opening (29).

14. Fuel supply installation according to Claim 12, characterised in that an annular compensation step (57) is provided on the metering piston (14), the annular surface of which annular compensation step (57) is the same size as that of the boundary surface (56) of the annular groove (27), which boundary surfsce (56) faces away from the control surface (2), and which annular compensation step (57) defines on the one side a compensation space (58) which is connected to the liquefied petroleum gas tank (35).

15. Fuel supply installation according to Claim 14, characterised in that liquefied petroleum gas is used for producing the restoring force at the metering piston (14), the pressure of which liquefied petroleum gas, in dependence of the operating characteristics of the internal combustion engine, can be altered by at least one pressure-control valve (68) for adjusting the mixture of liquefied petroleum gas and air.

16. Fuel supply installation according to Claim 15, characterised in that the metering piston (14), with its end face (66) remote from the compensation step (57), projects into a pressure space (65) which is connected to a control pressure line (63) which is connected to the liquefied petroleum gas supply line (39) and is defined on the one side by an uncoupling choke (62) and on the other side by the pressure control valve (68).

17. Fuel supply installation according to Claim 16, characterised in that the pressure control valve (68) has a valve diaphram (71) which separates a vacuum chamber (72), which is connected to a vacuum line (73) leading to the suction pipe (7) downstream from a throttle valve (6), from a return-flow chamber (70) connected to the liquefied petroleum gas tank (35) and interacts with a valve seat (69) projecting into the return-flow chamber (70), via which valve seat (69) the control pressure line (63) opens into the returnflow chamber (70), and which is connected via a coupling member (74) to a compensation diaphram (75) which separates the vacuum chamber (72) from a compensation chamber (76) connected to the liquefied petroleum gas tank (35), and that a valve spring (80) is arranged in the vacuum chamber (72), which valve spring (80) loads the valve diaphram (71) in the direction of the valve seat (69) and is mounted on the other side such that it is fixed to the housing and the closing force of which onto the valve diaphram (71) can be reduced at temperatures below the engine operating temperature by an element (82) which works as a function of temperature.

18. Fuel supply installation according to Claim 17, characterised in that a control spring (88) is arranged in the vacuum chamber (72), which control spring (98), in addition to the valve spring (80), loads the valve diaphram (71) in the direction of the valve seat (69) and on the other side engages on a control diaphram (85) which on the one side, facing towards the control spring (88), can be acted upon by the pressure in the vacuum chamber (72) and on the other side can be acted upon by the atmospheric pressure.

19. Fuel supply installation according to Claim 18, characterised in that the control diaphram (85), at a certain suction pipe pressure, executes a movement leading to a reduction of the closing force of the control spring (88) onto the valve diaphram (71), and the movement of the control diaphram (85) can be limited by stops (81, 89).

## Revendications

1.- Procédé pour alimenter un moteur à combustion interne (8) avec un gaz liquéfié utilisé comme carburant au moyen d'une installation d'alimentation en carburant qui comporte une canalisation d'alimentation (39) et une buse (54) pour l'injection d'une quantité de gaz liquéfiée dépendant des grandeurs caractéristiques de fonctionnement du moteur à combustion interne, et en amont de laquelle la quantité de gaz liquéfiée à injecter est dosée, procédé caractérisé en ce que le gaz liquéfié est maintenu, avant le dosage, à une pression se situant au-dessus de la pression de vapeur et passe à travers un échangeur thermique (42) dans lequel il est refroidi par le gaz liquéfié, dosé et au moins en partie vaporisé, s'écoulant vers la base (54).

2.- Procédé selon la revendication 1, caractérisé en ce que le gaz liquéfié s'écoule avant le dosage à contre-courant à travers l'échangeur thermique (42) à contre-courant par rapport au gaz liquéfié dose.

3.- Procédé selon la revendication 1, caractérisé en ce que le gaz liquéfié est refoulé dans la canalisation d'alimentation (39), avec une pression déterminée se situant au-dessus de la pression de vapeur, par un equipement de mise sous pression (36).

4.- Installation d'alimentation en carburant pour moteurs à combustion interne (8) avec une canalisation d'alimentation (39), un distributeur de dosage (10) et une buse (54) disposée en aval du distributeur de dosage (10), pour l'injection dans la tubulure d'aspiration (5) d'une quantité de gaz liquéfié dépendant de grandeurs caractéristiques du fonctionnement du moteur à combustion interne, et pour la mise en oeuvre d'un procédé pour l'alimentation d'un moteur à combustion interne (8) selon une des revendications 1 à 3, installation caractérisée en ce qu'en amont du distributeur de dosage (10), le gaz liquéfié est maintenu par un équipement de mise sous pression (36) à une pression se situant au-dessus de la pression de vapeur, et que la canalisation d'alimentation en carburant (39) passe en amont du distributeur de dosage (10) par un échangeur thermique (42) que traverse également en aval du distributeur de dosage, le gaz liquéfié au moins partiellement vaporisé s'écoulant vers la buse (54).

5.- Installation d'alimentation en carburant selon la revendication 4, caractérisée en ce que le distributeur de dosage (10) est relié en aval avec une canalisation d'insufflation (53) de l'échangeur thermique (42) et que la canalisation d'alimentation en carburant (39) est disposée sur l'échangeur thermique (42) en amont du distributeur de dosage (10) de façon que le gaz liquéfié canalisé par l'intermédiaire de la canalisation d'alimentation en carburant (39) vers le distributeur de dosage (10) s'ecoule à travers l'échangeur thermique (42) à contre-courant par rapport au gaz liquéfié dosé s'écoulant par la canalisation d'insufflation (53) vers la buse (54) et en entourant cette canalisation d'insufflation (53).

6.- Installation d'alimentation en carburant selon la revendication 5, caractérisée en ce qu'un équipement de réglage de la pression (40, 40') est disposé en aval de l'équipement de mise sous pression (36) du gaz liquéfié dans la canalisation d'alimentation de carburant (39).

7.- Installation d'alimentation en carburant selon la revendication 6, caractérisée en ce que l'équipement de mise sous pression (36) est disposé à l'intérieur d'un réservoir de gaz liquéfié (35).

8.- Installation d'alimentation en carburant selon la revendication 4 ou 5, caractérisée en ce que le distributeur de dosage (10) comporte une partie mobile de distributeur (14) dont la position est déterminée contre l'action d'un effort de rappel par un organe de mesure de l'air (33)réagissant au débit d'air aspiré dans la tubulure d'aspiration.

9.- Installation d'alimentation en carburant selon la revendication 8, caractérisée en ce qu'un piston de dosage (14) joue le rôle de la partie mobile du distributeur de dosage (10).

10.- Installation d'alimentation en carburant selon la revendication 9, caractérisée en ce que le piston de dosage (14) susceptible d'être actionné par l'organe de mesure d'air (3) est monté dans un alésage de guidage (25) et ouvre plus ou moins un orifice de dosage (29) prévu dans la paroi de l'alésage de guidage (25).

11.- Installation d'alimentation en carburant selon la revendication 10, caractérisée en ce que le piston de dosage (14) est monté de façon à pouvoir coulisser axialement dans l'alésage de guidage (25).

12.- Installation d'alimentation en carburant selon la revendication 11, caractérisée en ce que le piston de dosage (14) comporte une gorge annulaire (27) dont une surface de délimitation axiale coopere en jouant le rôle de surface de commande (28) avec l'orifice de dosage (29).

13.- Installation d'alimentation en carburant selon la revendication 12, caractérisée en ce que l'orifice de dosage (29) est relié à une chambre d'injection (44) d'une soupape de réglage (45) dans laquelle sont disposés un siège de soupape (47) coopérant avec une paroi mobile (46) et un ressort de soupape de réglage (48) sollicitant cette paroi mobile (46) dans le sens de l'ouverture de la soupape de réglage (45), et cette chambre d'injection étant séparée par la paroi mobile (46) d'une chambre de commande (49) dans laquelle regne la pression du gaz liquéfié en amont de l'orifice de mesure (29).

14.- Installation d'alimentation en carburant selon la revendication 12, caractérisée en ce que, sur le piston de dosage (14), est ménagé un épaulement de compensation de forme annulaire (57) dont la surface annulaire est de même importance que la surface de délimitation (56) opposée à la surface de commande (28), de la gorge annulaire (27), cet épaulement de compensation délimitant d'un côté une chambre de compensation (58) qui est en communication avec le réservoir de gaz liquéfié (35).

15.- Installation d'alimentation en carburant selon la revendication 14, caractérisée en ce que le gaz liquéfié est utilisé pour obtenir l'effort de rappel sur le piston de dosage (14), la pression de ce gaz liquéfié étant susceptible d'être modifiée en fonction de grandeurs caractéristiques de fonctionnement du moteur à combustion interne, en vue de l'adaptation du mélange gaz liquéfié-air, par au moins une soupape de commande de la pression (68).

16.- Installation d'alimentation en carburant selon la revendication 15, caractérisée en ce que la face frontale (66) du piston de réglage (14), opposée à l'épaulement de compensation (57) de ce piston, pénetre dans une chambre de pression (65) qui est en communication avec une canalisation de pression de commande (63), laquelle est reliée à la canalisation d'alimentation en gaz liquéfié (39), et qui est délimitée, d'une part, par un étranglement de découplage (62) et, d'autre part, par la soupape de commande de la pression (68).

17.- Installation d'alimentation en carburant selon la revendication 16, caractérisée en ce que la soupape de commande de la pression (68) comporte une membrane de soupape (71) qui sépare une chambre de dépression (72), reliée à une canalisation de dépression (73) aboutissant à la tubulure d'aspiration (7) en aval d'un clapet d'étranglement (6), d'une chambre d'écoulement en retour (70) reliée au réservoir de gaz liquéfié (35), cette membrane coopérant avec un siège de soupape (69) pénétrant dans la chambre d'écoulement en retour (70), siège par l'intermédiaire duquel la canalisation de pression de commande (63) débouche dans la chambre d'écoulement en retour (70), et cette membrane étant reliée, par l'intermédiaire d'un organe d'accouplement (74), avec une membrane de compensation (75) qui sépare la chambre de pression (72) d'une chambre de compensation (76) reliée au réservoir de gaz liquéfié (35), tandis qu'un ressort de soupape (80) est disposé dans la chambre de dépression (72), ressort qui sollicite la membrane de soupape (71) en direction du siège de soupape (69) et qui est, d'autre part, solidaire du boîtier, tandis que son effort de fermeture sur la membrane de soupape (71) est susceptible d'être diminué pour des températures se situant au-dessous de la température de fonctionnement du moteur par un élé-ment (82) opérant en fonction de la température.

18.- Installation d'alimentation en carburant selon la revendication 17, caractérisée en ce que, dans la chambre de dépression (72), est disposé un ressort de commande (88) qui en plus du ressort de soupape (80), sollicite la membrane de soupape (71) en direction du siege de soupape (69) et qui, d'autre part, vient en prise sur une membrane de commande (85) qui,du côté tourné vers le ressort de commande (88), est susceptible d'être sollicitée par la pression dans la chambre de dépression (72), tandis que, de 1,autre côté, elle est susceptible d'être sollicitée par la pression atmosphérique.

19.- Installation d'alimentation en carburant selon la revendication 18, caractérisée en ce que la membrane de commande (85), lors d'une pression déterminée dans la tubulure d'aspiration, effectue un déplacement dans le sens d'une réduction de l'effort de fermeture du ressort de commande (88) sur la membrane de soupape (71), tandis que le deplacement de la membrane de commande (85) est susceptible d'être délimité par des butées (81, 89).

0 086 348